Europäisches Patentamt

European Patent Office

Office européen des brevets

(19)

(11) Publication number: 0 339 743
A2

## (12) EUROPEAN PATENT APPLICATION

(21) Application number: 89201065.3

(22) Date of filing: 25.04.89

(51) Int. Cl.⁴: **C08L 51/06** , **C08L 23/32** , **C08K 5/09**

(30) Priority: 28.04.88 GB 8810101

(43) Date of publication of application:
02.11.89 Bulletin 89/44

(84) Designated Contracting States:
**BE DE ES FR GB IT NL SE**

(71) Applicant: SHELL INTERNATIONALE
RESEARCH MAATSCHAPPIJ B.V.
Carel van Bylandtlaan 30
NL-2596 HR Den Haag(NL)

(72) Inventor: Udding, Anne Catharinus
Badhuisweg 3
NL-1031 CM Amsterdam(NL)

(74) Representative: Aalbers, Onno et al
P.O. Box 302
NL-2501 CH The Hague(NL)

(54) **Novel thermoplastic rubber compositions.**

(57) Thermoplastic rubber compositions comprising
a) an at least partly neutralized carboxylated elastomeric polymer, wherein
1) the polymer is substantially free of olefinic unsaturation,
2) the carboxyl groups originate in the in the reaction of the non-carboxylated elastomeric polymer with at least 0.5 pbw of an azidosulfonylbenzoic acid per 100 pbw of polymer
3) a metal-based neutralizing agent has been used for the neutralization of the carboxyl groups, and
4) the degree of neutralization of the carboxyl groups is at least 50%,
and
b) a zinc carboxylate, based on a linear or branched monocarboxylic acid having at least 12 carbon atoms per molecule, which zinc carboxylate is present in an amount of at least 6 pbw per 100 pbw of said carboxylated polymer.

EP 0 339 743 A2

# NOVEL THERMOPLASTIC RUBBER COMPOSITIONS

The present invention relates to novel thermoplastic rubber compositions and more in particular to novel thermoplastic rubber compositions based on functionalized rubber polymers, to their preparation and use.

Thermoplastic rubbers and compositions based thereon, are known, and may be distinguished from thermoplastic and/or elastomeric polymers or compounds thereof, in that at ambient and not too elevated temperatures they perform as crosslinked materials, c.f. vulcanised rubber materials, while at more elevated temperatures they display the characteristics of thermoplastic materials.

A class of thermoplastic elastomers which can be distinguished from the conventional hydrocarbon block copolymer type of thermoplastic rubbers, are the elastomeric ionomers, i.e. elastomeric polymers carrying one or more pendant ionic or inorganic salt groups along the polymer backbone. These ionic groups can interact with one another, thereby forming ion-rich aggregates contained in a non-polar polymeric medium.

The elastomeric polymers which may be used in the preparation of the elastomeric ionomers as described hereinbefore, will generally be elastomers carrying one or more acid or acid-reacting groups, such as sulfonic acid and carboxylic acid groups. Such sulfonic acid groups-containing elastomers may conveniently be obtained via a direct sulfonation of a preformed, suitable elastomer, e.g. an elastomer containing olefinic unsaturated groups and/or arene groups. Carboxylic acid groups-containing elastomers may conveniently be prepared by copolymerizing one or more olefinically unsaturated carboxylic acids, such as acrylic and methacrylic acid, with one or more other suitable olefinically unsaturated monomers. However, as said copolymerization is generally conducted in the presence of a radical or redox initiator system, it will generally provide polymers having an incorrect balance of molecular weight and molecular weight distribution, for application in thermoplastic rubber compositions.

An alternative method for the preparation of carboxylated elastomers would be the introduction of carboxyl groups via grafting of a suitable olefinically unsaturated carboxylic acid or anhydride, such as maleic anhydride, onto a preformed elastomer. It was however found that the ionomers, obtained by neutralization of these carboxylated elastomers, were characterized by insufficient flow at elevated temperature and a low tensile strength.

Hence it can be concluded that there is need for further improvement in the preparation of thermoplastic rubber polymers based on carboxylated elastomeric polymers and compositions based thereon.

It is the object of the present invention to develop thermoplastic rubber compositions based on carboxylated elastomeric polymers, which do not suffer from one or more of the disadvantages described hereinbefore.

Continuing research and experimentation has surprisingly shown that combining selected carboxylated rubber polymers with selected plasticizing compounds results in thermoplastic rubber compositions having improved balance of mechanical and rheological performance properties.

The invention provides therefore thermoplastic rubber compositions comprising:

a) an at least partly neutralized carboxylated elastomeric polymer, wherein

1) the polymer is substantially free of olefinic unsaturation,

2) the carboxyl groups originate in the reaction of the non-carboxylated elastomeric polymer with at least 0.5 pbw of an azidosulfonylbenzoic acid per 100 pbw of polymer.

3) a metal-based neutralizing agent has been used for the neutralization of the carboxyl groups, and

4) the degree of neutralization of the carboxyl groups is at least 50%, and

b) a zinc carboxylate, based on a linear or branched monocarboxylic acid having at least 12 carbon atoms per molecule, which zinc carboxylate is present in an amount of at least 6 pbw per 100 pbw of said carboxylated polymer.

In the context of the present invention the term degree of neutralization refers to the number of metal equivalents of the metal-based neutralizing agent used per equivalent carboxyl group multiplied by 100%. Hence when the degree of neutralization exceeds 100% it indicates the presence of an excess of neutralizing agent, in the carboxylated thermoplastic elastomer.

In theory any polymer carrying ionic groups, as described hereinbefore, can be considered to be an ionomer. However, in order to obtain the characteristics of a fully crosslinked polymer, such an ionomer should carry on average more than two ionic groups per molecule (molar functionality >2). Such fully cross-linked ionomers can be obtained by neutralizing polymers carrying on average only just more than two functional groups, e.g. carboxyl groups or sulfonic acid groups, to a degree of 100%. Alternatively, a similar performance may be achieved with a functionalized polymer having a molar functionality considerably higher than two and which has been neutralized to such a degree to provide the polymer with on average just over two ionic groups per molecule.

In the preparation of the carboxylated elastomeric polymers which may be employed in the compositions of the present invention, it has been experienced that the reaction of the polymer with an azidosulfonylbenzoic acid does not always proceed quantitatively. Hence it is preferred in the process of the present invention to employ carboxylated elastomeric polymers which originate in the reaction of from 1-8 pbw of an azidosulfonylbenzoic acid with 100 pbw of said elastomer. Although it could be expected that the highest degree of coherence for a given carboxylated polymer, as demonstrated e.g. by lack of or insufficient flow at elevated temperatures and a high tensile strength, would be obtained with fully crosslinked such polymers i.e. a degree of neutralization of 100%, it has surprisingly been found that a degree of neutralization exceeding 100% may have a beneficial influence on the tensile properties of the compositions of the present invention. Hence it is preferred to employ carboxylated elastomeric polymers having a degree of neutralization of at least 200%.

Preferred at least partly neutralized carboxylated elastomeric polymers to be employed in the compositions of the present invention, are those based on a zinc-based neutralizing agent.

In order to comply with the description thermoplastic, the compositions of the present invention should demonstrate at least some degree of thermoplasticity. As the at least partly and certainly the 100% neutralized carboxylated elastomeric polymers as such demonstrated only very little or no flow at all at elevated temperatures, they required the admixture of a plasticizing compound in order to achieve a sufficient degree of thermoplasticity.

Zinc carboxylates, as described hereinbefore, proved to be very suitable plasticizing compounds when used in amounts of at least 6 pbw per 100 pbw of neutralized carboxylated polymer. Preferred thermoplastic rubber compositions are those wherein the zinc carboxylates are present in an amount of from 10 - 50 pbw of the polymer.

The carboxylic acid whereon the zinc carboxylate is based is preferably a fatty acid, stearic acid is a preferred such fatty acid.

The at least partly neutralized elastomeric polymers which may be employed in the compositions of the present invention are based on substantially olefinic unsaturation-free elastomers. Examples of such polymers include elastomeric polymers based on one or more olefins, such as polyisobutylene and ethylenepropylene rubber, as well as hydrogenated elastomeric polymers based on at least a diene monomer, such as hydrogenated styrenebutadiene copolymers which as a result of the hydrogenation are at least substantially free of olefinic unsaturation.

The azidosulfonylbenzoic acid on which the carboxylated elastomeric polymers may be based include 3-azidosulfonylbenzoic acid, 4-azidosulfonyl-phthalic acid and 4-azidosulfonyl-phenoxyacetic acid as well as such acids having further substituents attached to the aromatic nucleus such as 2-chloro-5-azidosulfonylbenzoic acid, 4-neopentyl-5-azidosulfonylbenzoic acid, 4-ethyl-5-azidosulfonylbenzoic acid and 2-hydroxy-5-azidosulfonylbenzoic acid. 3-Azidosulfonylbenzoic acid is a preferred azidosulfonylbenzoic acid.

The thermoplastic rubber compositions of the present invention may be prepared by mixing at an elevated temperature a carboxylated elastomeric polymer, as described hereinbefore, with a sufficient amount of a metal-based neutralizing agent, to effect a degree of neutralization of the carboxyl groups of at least 50%, and with at least 6 pbw of a zinc carboxylate, as described hereinbefore, per 100 pbw of carboxylated polymer. Said mixing may be conducted in an internal mixer or in an extruder at a temperature which is generally in the range of from 120 - 180 °C, or on a rubber mill at a temperature in the range of from 70 - 120 °C. The mixing of the carboxylated elastomer with the neutralizing agent and the plasticizing compound may be conducted simultaneously or separately. With the latter embodiment the order of mixing is not critical.

The metal-based neutralizing agents which may be employed in the preparation of the at least partly neutralized carboxylated elastomeric polymers include oxide-, hydroxide-, salt- and alcoholate-type neutralizing agents when said neutralizing agent is a salt-type neutralizing agent said salt should be based on an acid having a higher pKa than that of the carboxyl groups present in the carboxylated elastomer. Oxide-type neutralizing agents are preferred; zinc oxide (ZnO) being a preferred oxide type neutralizing agent.

The zinc carboxylate employed in the composition of the present invention and which may be incorporated therein as described hereinbefore, may also be prepared in situ, i.e. by admixing the corresponding carboxylic acid, having at least 12 carbon atoms in its molecule, and an amount of neutralizing agent which is preferably at least sufficient to neutralize the carboxyl groups of the carboxylated elastomer as well as those of the carboxylic acid.

3

The thermoplastic rubber compositions of the present invention may be used as such or may be extended to include additional components. Examples of such additional components include compounds which are generally used in rubber compounding and especially in thermoplastic rubber compounding such as pigments, dyes, fillers, processing acids, stabilizers, antioxidants and the like. Should the composition of the present invention be extended to include one or more additional components, the incorporation of said component(s) may conveniently be conducted in e.g. an internal mixer or on a rubber mill at a temperature as indicated hereinbefore.

It has been found that the thermoplastic rubber compositions of the present invention are eminently suited for blending with polyamide polymers, as this leads to blends with a high degree of dispersion, e.g. a particle size < 10 nm, and a very good physical stability, i.e. samples made from these blends, when tested show no signs of delamination. The impact resistance properties of said blends were found to be considerably improved compared to those of the unmodified polyamide polymer. The blends may conveniently be prepared in an internal mixer or an extruder and employing a polyamide polymer: thermoplastic rubber composition m/m ratio in the range of 65:35 to 95:5, preferably from 75:25 to 90:10. In view of the high melting point of polyamides, the blending is generally conducted at temperatures well above 200 °C, e.g. at a temperature in the range of from 220 - 260 °C. The blends of polyamides and thermoplastic rubber composition of the present invention, in the weight ratio's as mentioned hereinbefore, are novel. Nylon-6 is a preferred polyamide polymer for use in said blends.

The invention will be further illustrated with the following examples for which the following information is provided.

Materials used:

Ethylene-propylene rubber (EPR):
Vistalon 404 (ex Exxon), ethylene content approx. 40 %m
Vistalon 457 (ex Exxon), ethylene content approx. 45 %m
Vistalon 504 (ex Exxon), ethylene content approx. 52 %m
Carboxylic acid: 3-azidosulfonylbenzoic acid (ABS).
Ionox-330 : 1,3,5-trimethyl-2,4,6-tris(3,5-di-tert.-butyl-4-hydroxy-benzyl)benzene, antioxidant (ex Shell Ned. Chemie).
Akulon Polyamide 6: a Nylon-6 type polyamide (ex AKZO Plastics).

Methods for product characterization.

Melt index (MI) was determined according to ASTM D 1238-L at 190 °C using a load of 12.5 kg.
Tensile Strength and Elongation at break was determined according to ISO R 527.
Notched Charpy Impact was determined according to ISO 179.
Tensile Yield Stress was determined according to ISO R 527.
Elongation at yield was determined from the stress-strain curves obtained according to ISO R 527.
Flexural strength was determined according to ASTM D-790.

Examples I-IV

Preparation of thermoplastic rubber compositions based on carboxylated EPR with degree of carboxylation.

Vistalon 404 was blended with ASB in the ratios as indicated hereinafter at 110 °C on a rubber mill. Subsequently, amounts of the thus prepared blends corresponding with 50 g rubber were fed into an internal mixer a 50 ml (Brabender Plastograph) equipped with kneading screws and having a temperature of 190 °C. The mixer was operated at a speed of 30 revolutions per minute (rpm). The total mixing time was 5 minutes during which the temperature was raised to 210 °C. After removal from the mixer the mixture was allowed to cool to 20 °C. Elemental analysis for nitrogen and sulphur applied to the polymer after a double, sequential, dissolving/precipitation treatment with toluene and methanol respectively showed that between 60 - 65% of the ASB had become attached to the polymer.

The carboxylated polymers were subsequently blended on a rubber mill at 120 °C for approximately 5 minutes with ZnO or NaOCH$_3$, zinc stearate and lonox-330 in amounts as indicated hereinafter.

Samples for testing were prepared from the thus prepared thermoplastic rubber compositions via compression moulding. The composition and the corresponding performance data are given in Table 1.

Table 1

| Example | | I | II | III | IV |
|---|---|---|---|---|---|
| EPR (Vistalon 404) | pbw | 100 | 100 | 100 | 100 |
| ASB | " | 2 | 4 | 6 | 6 |
| V$_1$ Degree of carb. | % | 70 | 66 | 62 | 62 |
| Carboxylated EPR | " | 100 | 100 | 100 | 100 |
| ZnO | " | 10 | 10 | 10 | - |
| NaOCH$_3$ | " | - | - | - | 2 |
| V$_2$ Degree of neutr. | % | 3987 | 2143 | 1525 | 177 |
| Zinc stearate | " | 30 | 30 | 30 | 30 |
| lonox-330 | " | 1 | 1 | 1 | 1 |
| Melt Index | g/10 min | 25.4 | 17.3· | 5.4 | 5.6 |
| Tensile strength | MPa | 9.3 | 14.0 | 17.0 | 17.3 |
| Elongation at break | % | 1280 | 1040 | 960 | 970 |

Examples V-XI.

Preparation of thermoplastic rubber compositions, based on carboxylated EPR, having a variation in the degree and type of neutralizing agent and zinc stearate content.

A blend of Vistalon 504 and ASB in a weight ratio of 100:6 was prepared following the procedure as described in Examples I-IV. The subsequent carboxylation reaction was conducted in co-rotating twin-screw extruder (Werner/Pfleiderer) having twin 28 mm diameter bores and a length/diameter ratio of 27.6. The feed section of the extruder was held at a temperature of approximately 30 °C while the temperature of the five subsequent sections was set at 170 °C, 210 °C, 210 °, 205 °C (devolatilizing section) and 210 °C respectively. The extruder was operated at 30 rpm while the residence time was 2-4 minutes.

The thus prepared carboxylated EPR was mixed with ZnO or MgOH and zinc stearate in amounts as indicated hereinafter and following the procedure as described hereinbefore in Examples I-IV, to arrive at the thermoplastic rubber compositions, and the corresponding samples for testing. The composition data and the corresponding performance data are given in Table 2.

Comparative Experiment A

Following the procedure as described for Examples I-IV, Vistalon 504 was carboxylated with 1.19 pbw of maleic anhydride (which amount contains the same number of acid equivalents as 6 pbw of ASB) in the presence of 0.12 pbw of dicumyl peroxide both amounts per 100 pbw of EPR. The resulting carboxylated rubber was subsequently mixed with ZnO and zinc stearate to arrive at a thermoplastic rubber composition. Composition and performance data have been included in Table 2.

Comparative Experiment B

A thermoplastic rubber compound based on carboxylated Vistalon 504 (6 pbw ASB) was prepared following the procedure as described for Example III but replacing the 30 pbw of zinc stearate with 40 pbw of paraffinic extender oil (Paraffinic oil 103 ex Witco). Composition and performance data of this thermoplastic rubber composition have been included in Table 2.

TABLE 2

| Example | | V | VI | VII | VIII | IX | X | XI | - | - - |
|---|---|---|---|---|---|---|---|---|---|---|
| Comp. Experiment | | - | - | - | - | - | - | - | A | B |
| Carboxylated Vistalon 504 | pbw | 100 | 100 | 100 | 100 | 100 | 100 | 100 | 100* | 100 |
| V· Degree of carb. | % | 62 | 62 | 62 | 62 | 62 | 62 | 62 | - | 62 |
| ZnO | pbw | 5 | 5 | 5 | 10 | 10 | 10 | - | 10 | 10 |
| Mg(OH)2 | " | - | - | - | - | - | - | 0.8 | - | - |
| V2 Degree of neutr. | % | 731 | 731 | 731 | 1525 | 1525 | 1525 | 115 | - | 1525 |
| Zinc stearate | pbw | 30 | 40 | 50 | 30 | 40 | 50 | 30 | 30 | - |
| Paraffinic oil | " | - | - | - | - | - | - | - | - | 40 |
| Melt Index | g/10 min | 2.7 | 5.0 | 6.6 | 2.6 | 5.0 | 6.4 | 1.9 | >50 (0.9)** | 0.2 |
| Tensile Strength | MPa | 26.9 | 28.5 | 22.8 | 25.8 | 26.6 | 21.0 | 11.8 | 1.9 (0.85)** | 15 |
| Elongation at break | % | 815 | 855 | 860 | 840 | 840 | 865 | 855 | 685 | 900 |

\* EPR carboxylated with maleic anhydride

** Values obtained in absence of zinc stearate.

Examples XII-XIV

Preparation of thermoplastic rubber compositions based on carboxylated EPR with a variation in the type of EPR.

Three types of EPR, which differed in ethylene content, were carboxylated with 6 pbw of ABS per 100 pbw of EPR and subsequently formulated to thermoplastic rubber compositions by mixing with ZnO and zinc stearate following the procedure as described in Examples I-IV. Compositions and the corresponding performance data are given in Table 3.

Table 3

| Example | | | XII | XIII | XIV |
|---|---|---|---|---|---|
| EPR type | | | Vistalon 404 | Vistalon 457 | Vistalon 504 |
| Ethylene content | | % | 40 | 45 | 52 |
| Carboxylated EPR (6 pbw ASB) | | pbw | 100 | 100 | 100 |
| V1 Degree of carb. | | % | 62 | 62 | 62 |
| ZnO | | pbw | 10 | 10 | 10 |
| V2 Degree of neutr. | | % | 1525 | 1525 | 1525 |
| Zinc stearate | | pbw | 30 | 30 | 30 |
| Melt Index | | g/10 min | 5.4 | 6.6 | 2.6 |
| Tensile strength | | MPa | 17.0 | 17.3 | 25.8 |
| Elongation at break | | % | 960 | 910 | 840 |

Examples XV-XIX

Preparation of filler and extender oil containing thermoplastic rubber compositions.

Thermoplastic rubber compositions based on different carboxylated EPR's were prepared by mixing the carboxylated rubbers on a rubber mill at 120 °C with different types of fillers and in a number of cases also with a naphthenic extender oil (Shell flex 451), in addition to the mixing thereof with ZnO and zinc stearate, in amounts and of the type as indicated hereinafter. Samples for testing the compositions were prepared via compression moulding for the Vistalon 404 and 457 based compositions and via injection moulding for the Vistalon 504 based compositions. The compositions and performance data are given in Table 4.

Examples XX-XXI

Preparation of thermoplastic rubber composition/Nylon-6 blends.

Blends of thermoplastic rubber compositions, as prepared in Example III, and Nylon-6 were prepared by mixing them in the Brabender Plastograph as described hereinbefore at a temperature of 240 °C for 5 minutes. Samples for testing the performance aspects of these blends were prepared via compression moulding. Blend composition and performance data are given in Table 5.

Comparative Experiments C and D.

Following the procedure as described in Example XX a similar blend was prepared but based on carboxylated Vistalon 404 (6 pbw ASB) instead of on the thermoplastic rubber compound, while in a second experiment Nylon-6 as such was submitted to a similar heat treatment in the Brabender Plastograph.

Samples for testing the blend and Nylon-6 were again prepared via compression moulding.

Product and performance data have been included in Table 5.

TABLE 4

| Example | | XV | XVI | XVII | XVIII | XIX |
|---|---|---|---|---|---|---|
| EPR type | | Vistalon 457 | Vistalon 457 | Vistalon 404 | Vistalon 504 | Vistalon 504 |
| Carboxylated EPR (6 pbw ASB) | pbw | 100 | 100 | 100 | 100 | 100 |
| ZnO | " | 10 | 10 | 10 | 10 | 10 |
| Zinc stearate | " | 30 | 30 | 30 | 40 | 40 |
| HAF | " | 40 | - | 40 | - | - |
| Silteg AS₇ | " | - | 40 | - | - | - |
| TiO₂ | " | - | 8 | - | - | - |
| Polypropylene powder | " | - | - | - | 40 | 40 |
| Naphthenic oil | " | - | - | 50 | - | 50 |
| Melt Index | g/10 min | 1.4 | 0.9 | 65 | 28 | 130 |
| Tensile strength | MPa | 16.4 | 11.9 | 10.3 | 14.9 | 11.5 |
| Elongation at break | % | 720 | 790 | 1060 | - | - |

TABLE 5

| Example | | XX | XXI | - | - |
|---|---|---|---|---|---|
| Comp. experiment | | - | - | C | D |
| Thermoplastic rubber comp.ex Example III | pbw | 20 | 20* | - | - |
| Nylon-6 | " | 80 | 80 | 80 | 100 |
| Carboxylated Vistalon 404 (6 pbw ASB) | " | - | - | 20 | - |
| Melt Index | g/10 min | 6.2 | 5.3 | 3.3 | 2.6 |
| Charpy Impact Strength (notched) | KJ/m$^2$ | 6.2 | 5.1 | 3.2 | 1.3 |
| Yield Stress | MPa | 32 | 32 | 22 | 53 |
| Elongation at yield | % | 18 | 20 | 9 | 10 |
| Flexural strength at 5% strain | MPa | 58 | 59 | 45 | 88 |
| Blend dispersion | | excellent | excellent | very good | - |

\* Composition contains only 10 pbw of zinc stearate per 100 pbw of carboxylated EPR.

**Claims**

1. Thermoplastic rubber compositions comprising:
   a) an at least partly neutralized carboxylated elastomeric polymer, wherein
1) the polymer is substantially free of olefinic unsaturation,
2) the carboxyl groups originate in the reaction of the non-carboxylated elastomeric polymer with at least 0.5 pbw of an azidosulfonylbenzoic acid per 100 pbw of polymer,
3) a metal-based neutralizing agent has been used for the neutralization of carboxyl groups, and
4) the degree of neutralization of the carboxyl groups is at least 50%. ·
   and
   b) a zinc carboxylate, based on a linear or branched monocarboxylic acid having at least 12 carbon atoms per molecule, which zinc carboxylate is present in an amount of at least 6 pbw per 100 pbw of said carboxylated polymer.

2. A composition as claimed in claim 1, wherein the carboxyl groups originate in the reaction of said polymer with from 1-8 pbw of an azidosulfonylbenzoic acid per 100 pbw of polymer.

3. A composition as claimed in claim 1 or 2, wherein the zinc carboxylate is present in an amount of from 10-50 pbw per 100 pbw of carboxylated polymer.

4. A composition as claimed in any one of claims 1-3, wherein the neutralizing agent is a zinc-based neutralizing agent.

5. A composition as claimed in any one of claims 1-4, wherein the elastomeric polymer is an ethylene-propylene rubber.

6. Blends of thermoplastic rubber compositions with polyamide polymers, comprising
- 5-35 %m of a thermoplastic rubber composition as claimed in any one of claims 1-5, and
- 95-65 %m of a polyamide polymer.

7. Blends as claimed in claim 6, which comprise 10-25 %m of a thermoplastic rubber composition and 90-75 %m of a polyamide polymer.

8. Blends as claimed in claims 6 or 7, wherein the polyamide polymer is a Nylon-6 polymer.